# EUROPÄISCHE PATENTSCHRIFT

(11) **EP 4 008 523 B1**
(45) Veröffentlichungstag und Bekanntmachung des Hinweises auf die Patenterteilung: **29.11.2023**
(21) Anmeldenummer: 20020586.2
(22) Anmeldetag: 03.12.2020
(51) Int. Cl.: B29C 64/124, B08B 1/00, B33Y 70/10, B22F 12/00, B22F 10/00, B33Y 40/00, B33Y 30/00, B33Y 10/00, B29C 64/35, B29C 64/321, B29C 64/241, B29C 64/236, B29C 64/194, B22F 7/08

(54) **VERFAHREN UND VORRICHTUNG ZUM SCHICHTWEISEN AUFBAU EINES BAUTEILS AUS PHOTOPOLYMERISIERBAREM MATERIAL**
METHOD AND DEVICE FOR LAYERED CONSTRUCTION OF A COMPONENT MADE FROM PHOTOPOLYMERISABLE MATERIAL
PROCÉDÉ ET DISPOSITIF DE CONSTRUCTION EN COUCHES D'UN COMPOSANT EN MATIÈRE PHOTOPOLYMERISABLE

(43) Veröffentlichungstag der Anmeldung: 08.06.2022
(73) Patentinhaber: Lithoz GmbH, 1060 Wien (AT)
(72) Erfinder: Schmid, Michael, A-1020 Wien (AT); Eminger, Lukas, A-2215 Raggendorf (AT); Geier, Sebastian, A-1050 Wien (AT)
(74) Vertreter: Keschmann, Marc

(56) Entgegenhaltungen:
- EP-A1- 3 621 186
- EP-B1- 3 621 186
- WO-A1-2019/190902
- US-A1- 2015 165 695
- US-A1- 2017 072 635
- US-A1- 2017 182 708

## Beschreibung

Die Erfindung betrifft ein Verfahren zum schichtweisen Aufbau eines Bauteils aus photopolymerisierbarem Material, insbesondere einem Harz mit keramischem oder metallischem Füllstoff, bei dem nacheinander Bauteilschichten übereinander ausgebildet werden, indem jeweils auf einem Materialträger eine Materialschicht des photopolymerisierbaren Materials ausgebildet wird und die Bauplattform oder das an der Bauplattform zumindest teilweise aufgebaute Bauteil in die Materialschicht abgesenkt wird, sodass sich zwischen der Bauplattform bzw. dem Bauteil und dem Materialträger eine Schicht des photopolymerisierbaren Materials ausbildet, die insbesondere durch Bestrahlung durch den Materialträger hindurch ortsselektiv zur Ausbildung der gewünschten Geometrie der Bauteilschicht ausgehärtet wird, wonach das Bauteil mit der Bauteilschicht angehoben wird.

Die Erfindung betrifft weiters eine Vorrichtung zur Durchführung des erfindungsgemäßen Verfahrens. Anspruch 1 definiert das Verfahren gemäß der Erfindung und Anspruch 11 definiert die Vorrichtung gemäß der Erfindung.

Ein Verfahren und eine Vorrichtung der eingangs genannten Art sind in der WO 2010/045950 A1 und in der EP 2505341 A1 beschrieben. Das Verfahren dient zum schichtweisen Aufbau eines Bauteils unter Anwendung einer lithographiebasierten generativen Fertigung, zum Beispiel Rapid Prototyping. Dabei wird eine definierte Schicht aus photopolymerisierbarem Material, das sich auf einem wenigstens in Teilbereichen lichtdurchlässig ausgebildeten Materialträger befindet, auf folgende Weise gebildet. Eine vertikal gesteuert bewegliche Bauplattform wird von einem Hubmechanismus getragen, dass sie unter Steuerung einer Steuereinheit durch den Hubmechanismus vertikal angehoben und abgesenkt werden kann. Durch Absenken der Bauplattform in das photopolymerisierbare Material wird Material aus dem Zwischenraum zwischen der Unterseite der Bauplattform und dem Materialträger verdrängt. Durch genaues Einstellen der vertikalen Position der Bauplattform kann so eine Schicht aus photopolymerisierbarem Material zwischen der Unterseite der Bauplattform und dem Materialträger mit genau definierter Schichtdicke erzeugt werden. Die so definierte Schicht aus photopolymerisierbarem Material wird dann durch ortsselektive Belichtung von unten durch den lichtdurchlässigen Materialträger in der gewünschten Geometrie belichtet, um die Schicht dadurch an der Bauplattform auszuhärten. Anschließend wird die Bauplattform mit der daran ausgehärteten ersten Schicht angehoben und photopolymerisierbares Material in den Belichtungsbereich auf dem Materialträger nachgeführt. Diese Schritte werden wiederholt, um so das Bauteil aus aufeinanderfolgenden Schichten aufzubauen, wobei aber die Schicht aus photopolymerisierbarem Material nun nicht von der Bauplattform, sondern vom unfertigen Bauteil definiert wird. US 2015/165695 A1 offenbart den Oberbegriff des erfindungsgemäßen Verfahrens und der erfindungsgemäßen Vorrichtung.

Das oben beschriebene Verfahren ist insbesondere für die Verarbeitung von photopolymerisierbarem Material mit hoher Viskosität geeignet. Eine hohe Viskosität des Materials ist beispielsweise im Fall von keramikgefülltem photopolymerisierbaren Material zu beobachten. Die hohe Viskosität des photopolymerisierbaren Materials bedingt in der lithographiebasierten generativen Fertigung eine erhebliche Verschlechterung der Verarbeitbarkeit. Wenn im Rahmen der vorliegenden Erfindung von hochviskosem Material die Rede ist, so bezieht sich dies insbesondere auf eine Viskosität von mindestens 10 Pa·s.

Nach dem Aushärten einer Bauteilschicht bleibt beim Anheben des Bauteils aus dem auf dem Materialträger befindlichen Material nicht ausgehärtetes photopolymerisierbares Material an dem Bauteil haften. Das nicht ausgehärtete photopolymerisierbare Material bleibt hierbei insbesondere an der zuletzt aufgebauten Bauteilschicht haften. Dies führt dazu, dass das Bauteil am Ende des Bauprozesses von einer zähflüssigen Schicht nicht ausgehärteten photopolymerisierbaren Materials umgeben ist, die im Rahmen des Post-Processing aufwändig entfernt werden muss. Ein weiterer Nachteil des anhaftenden Materials liegt darin, dass keine Bauteile mit geschlossenen Geometrien, wie z.B. geschlossenen Hohlräumen (z.B. Kugeln), hergestellt werden können, da diese unerwünschterweise nicht ausgehärtetes photopolymerisierbares Material in den Hohlräumen enthalten würden.

Es ist daher die Aufgabe der vorliegenden Erfindung, ein Verfahren und eine Vorrichtung der eingangs genannten Art hinsichtlich der genannten Nachteile zu verbessern.

Zur Lösung dieser Aufgabe sieht die Erfindung bei einem Verfahren der eingangs genannten Art im Wesentlichen vor, dass nach der Ausbildung einer Bauteilschicht ein Materialentfernungsschritt erfolgt, in dem nach dem Anheben des Bauteils an dem Bauteil, insbesondere an der Bauteilschicht, anhaftendes, nicht oder nicht vollständig ausgehärtetes photopolymerisierbares Material mittels einer Materialentfernungseinheit zumindest teilweise entfernt wird, worauf das Bauteil ggf. für den nächsten Bauschritt wieder abgesenkt wird.

Im Rahmen der Erfindung implizieren die Begriffe "absenken" und "anheben" nicht eine bestimmte Bewegungsrichtung, wie z.B. eine vertikale Bewegung, sondern umfassen jede Bewegung, bei der das Bauteil in Richtung zum Materialträger bewegt ("abgesenkt") und von diesem entfernt ("angehoben") wird. Beispielsweise kann das Absenken das Eintauchen des Bauteils in die Materialschicht und das Anheben des Bauteils das Austauchen der gebildeten Bauteilschicht aus dem Material umfassen.

Dadurch, dass anhaftendes Material nach der Ausbildung einer Bauteilschicht zumindest teilweise entfernt wird, wird der Aufwand für die Nachbearbeitung des fertig aufgebauten Bauteils reduziert.

Bevorzugt wird anhaftendes, nicht ausgehärtetes photopolymerisierbares Material nach der Ausbildung jeder Bauteilschicht entfernt, sodass am Ende des Bauvorgangs tatsächlich ein Bauteil erhalten wird, an dem deutlich weniger oder idealerweise keine nicht ausgehärteten Materialreste anhaften.

Das Entfernen von anhaftendem Material eröffnet weiters die Möglichkeit, Bauteile mit geschlossenen Hohlräumen herzustellen, die deutlich weniger nicht ausgehärtetes Material enthalten.

Erfindungsgemäß erfolgt die Materialentfernung mit Hilfe einer Materialentfernungseinheit, bevorzugt mittels einer automatischen Materialentfernungseinheit, sodass händische Arbeitsschritte während des Bauprozesses vermieden werden können. Die Materialentfernung erfolgt hierbei in vorteilhafter Weise derart, dass die Materialentfernungseinheit nach dem Anheben des Bauteils an die Unterseite oder an den unteren Rand des Bauteils herangeführt wird und/oder umgekehrt das Bauteil an die Materialentfernungseinheit herangeführt wird, wobei das Heranführen bevorzugt automatisch erfolgt und von einer elektronischen Steuereinheit gesteuert wird.

Gemäß einer bevorzugten Ausbildung der Erfindung umfasst der Materialentfernungsschritt das Inkontaktbringen des anhaftenden photopolymerisierbaren Materials mit einem Kontaktelement, vorzugsweise einem saugfähigen, insbesondere flächigen Kontaktelement. Bei dem saugfähigen Kontaktelement kann es sich beispielsweise um ein Zellstoffband, ein Papier, eine Folie, ein Vlies oder einen Schwamm handeln. Das Inkontaktbringen erfolgt auf Grund einer Relativbewegung zwischen dem Bauteil und dem saugfähigen Kontaktelement. Das saugfähige flächige Kontaktelement und die Bauteilschicht mit dem anhaftenden Material können beispielsweise in einer quer, insbesondere senkrecht, zur Ebene der Bauteilschicht verlaufenden Relativbewegung miteinander in Kontakt gebracht werden. Hierbei erfolgt die Materialentfernung nach Art eines Abtupfens der Bauteilschicht, wobei insbesondere das am Rand der Bauteilschicht anhaftende nicht ausgehärtete Material an dem saugfähigen Kontaktelement kleben bleibt. Nach dem zumindest teilweisen Entfernen des nicht ausgehärteten Materials erfolgt eine gegenseitige Beabstandung des saugfähigen Kontaktelements und des Bauteils, sodass das Bauteil für den nächsten Bauschritt wieder in das auf dem Materialträger befindliche Material abgesenkt werden kann.

Das Kontaktelement kann alternativ eine bogenförmige, insbesondere zylindrische saugfähige Oberfläche aufweisen, sodass die Materialentfernung durch Abrollen der bogenförmigen Oberfläche auf dem Bauteil erfolgt. Das Kontaktelement kann hierbei beispielswiese als Walze ausgebildet sein. Das Kontaktelement ist zu diesem Zweck bevorzugt um eine Drehachse der bogenförmigen, insbesondere zylindrischen Oberfläche drehbar gelagert.

Erfindungsgemäß wird die Materialentfernungseinheit für den Materialentfernungsschritt zwischen das angehobene Bauteil und den Materialträger gebracht. Dies bedeutet, dass die Bauplattform samt dem daran ausgebildeten unfertigen Bauteil für den Materialentfernungsschritt lediglich in Höhenrichtung verlagert werden muss, wobei die laterale Ausrichtung des Bauteils zum Materialträger und der Belichtungseinheit beibehalten werden kann.

Gemäß einer vorteilhaften Weiterbildung ist das saugfähige flächige Kontaktelement als verfahrbares Band ausgebildet, wobei das Band nach einem Materialentfernungsschritt verfahren wird, um einen Bandabschnitt mit photopolymerisierbarem Material abzufördern und einen neuen Bandabschnitt für einen weiteren Materialentfernungsschritt bereitzustellen. Das verfahrbare Band kann hierbei auf einer Vorratsrolle vorrätig gehalten werden. Bevorzugt wird das Band von einer Vorratsrolle sukzessive abgerollt und das verbrauchte Band im Ausmaß der Abrollung auf eine Empfängerrolle aufgerollt. Dabei kann das Band im Bereich zwischen der Vorrats- und der Empfängerrolle mit Hilfe von Motoren, z.B. Servomotoren, gespannt gehalten wird. Im Bereich des Inkontaktkommens mit dem Bauteil kann das verfahrbare Band an der dem Bauteil abgewandten Seite von einem Stützelement abgestützt werden, um einen Gegendruck aufbringen zu können. Bevorzugt stellt das Stützelement eine elastisch nachgiebige Stützfläche zur Verfügung, sodass beim Kontakt mit dem Bauteil zwar ein Gegendruck erzeugt wird, das verfahrbare Band durch den Druck der Bauteilschicht jedoch auch nachgibt, was im Randbereich der Bauteilschicht zu einer leichten Schrägstellung des Bandes führt, was wiederum die Materialentfernung im Randbereich oder an den Seitenflächen der Bauteilschicht verbessert. Das nachgiebige Stützelement kann beispielsweise von einem Schwamm gebildet sein.

Das verfahrbare Band kann beispielsweise von einem Papier, einer Folie, einem Gewebe, einem Filz oder einem Vlies gebildet sein.

Gemäß einer bevorzugten Verfahrensweise wird der Materialentfernungsschritt in wenigstens zwei Schritten durchgeführt, wobei in einem ersten Schritt eine Teilmenge des anhaftenden photopolymerisierbaren Materials entfernt wird und in einem zweiten Schritt und ggf. zumindest einem weiteren Schritt eine Restmenge des anhaftenden photopolymerisierbaren Materials entfernt wird.

Um die Materialentfernung zu verbessern, sieht eine bevorzugte Ausbildung vor, dass das saugfähige Kontaktelement mit einer Flüssigkeit getränkt ist oder vor dem Inkontaktbringen mit einer Flüssigkeit, bevorzugt einem Lösungsmittel, versehen wird. Das Lösungsmittel kommt in der Folge mit dem zu entfernenden Material in Kontakt und löst dieses von der Bauteilschicht.

Eine weitere bevorzugte Ausbildung sieht vor, dass nach dem Materialentfernungsschritt und vor dem nächsten Bauschritt auf die Bauteilschicht Partikel aufgebracht werden, wobei die Partikel vorzugsweise mit dem saugfähigen Kontaktelement zur Bauteilschicht transportiert und durch Inkontaktbringen des saugfähigen Kontaktelements mit der Bauteilschicht auf die Bauteilschicht aufgebracht werden. Auf diese Weise können Partikel in das Bauteil integriert werden. Die Partikel könne hierbei beliebige Formen aufweisen, wie z.B. kugelförmige, ovale oder faserförmige Partikel. Bei den eingebrachten Partikel kann es sich beispielsweise um (keramische) Kurz- oder Endlosfasern, metallische Partikel oder Porogene handeln.

Ein weiterer Vorteil des erfindungsgemäßen Materialentfernungsschritts liegt darin, dass die Bauteilschicht nach dem Materialentfernungsschritt einer optischen Überprüfung mittels einer Bildaufnahmeeinrichtung oder einem 3D-Scanner unterzogen werden kann. Dadurch kann während des Bauprozesses eine Überwachung des Baufortschritts vorgenommen werden, wobei insbesondere die Geometrie der zuletzt hergestellten Bauteilschicht überprüft oder das Vorhandensein von Luftblasen in der Bauteilschicht detektiert werden kann. Eine derartige Qualitätssicherung wäre ohne den erfindungsgemäßen Materialentfernungsschritt nicht möglich, weil nicht ausgehärtetes anhaftendes Material die jeweils zuletzt aufgebaute Bauteilschicht zumindest teilweise verdeckt.

Ein weiterer wesentlicher Vorteil des erfindungsgemäßen Materialentfernungsschritts liegt in der Möglichkeit, ein Bauteil aus zwei oder mehreren unterschiedlichen photopolymerisierbaren Materialien aufzubauen ohne dass es zu einer signifikanten Kreuzkontamination zwischen den jeweiligen Materialvorräten auf dem Materialträger kommt.

Das Material kann beispielsweise schichtweise gewechselt werden. Zu diesem Zweck wird bevorzugt derart vorgegangen, dass eine erste Bauteilschicht aus einem ersten photopolymerisierbaren Material gebildet wird und dass nach dem Materialentfernungsschritt zur Entfernung von an der ersten Bauteilschicht anhaftendem ersten photopolymerisierbaren Material eine zweite Bauteilschicht aus einem zweiten photopolymerisierbaren Material gebildet wird, das sich vom ersten photopolymerisierbaren Material unterscheidet.

Es kann aber auch so vorgegangen werden, dass innerhalb ein und derselben Bauteilschicht zwei unterschiedliche Materialien verwendet werden. Eine bevorzugte Verfahrensweise sieht hierbei vor, dass eine Bauteilschicht mit einer ersten Geometrie aus einem ersten photopolymerisierbaren Material gebildet wird, wobei die erste Geometrie wenigstens einen Teilbereich der Unterseite der zuletzt ausgebildeten Bauteilschicht unbedeckt lässt, dass mittels des Materialentfernungsschritts an der Bauteilschicht und in dem wenigstens einen unbedeckten Teilbereich anhaftendes erstes photopolymerisierbares Material entfernt wird und dass danach ein Bauschritt mit einem zweiten photopolymerisierbaren Material vorgenommen wird, das sich vom ersten photopolymerisierbaren Material unterscheidet, wobei der Bauschritt das Aushärten von Material im Teilbereich umfasst.

Für den Materialwechsel wird bevorzugt so vorgegangen, dass zwei oder mehrere Materialträger für voneinander verschiedenes photopolymerisierbares Material bereitgestellt werden, die nach dem Anheben des Bauteils selektiv zwischen der Bauplattform bzw. dem Bauteil und der Belichtungseinheit positioniert sein können.

Eine alternative Möglichkeit zur Materialentfernung liegt in einer fluidischen bzw. pneumatischen Materialabtragung. Eine bevorzugte Ausbildung sieht hierbei vor, dass der Materialentfernungsschritt das Erzeugen einer Fluidströmung, wie z.B. einer Flüssigkeits- oder Gasströmung, im Bereich des anhaftenden, nicht ausgehärteten photopolymerisierbaren Materials umfasst, welche das Material mitreißt.

Alternativ kann die Materialentfernung auch durch Eintauchen des Bauteils in ein Ultraschallbad erfolgen.

Um die einzelnen Materialschichten für die hintereinander herzustellenden Bauteilschichten auszubilden, wird bevorzugt so vorgegangen, dass die Bauplattform nach dem Aushärtungsschritt angehoben und zur Ausbildung der nächsten Bauteilschicht wieder zum Materialträger abgesenkt wird, nachdem Material unter der angehobenen Bauplattform nachgeführt wurde, um die Materialschicht auszubilden.

Die Nachführung des Materials wird in diesem Zusammenhang bevorzugt mittels Materialverteilung mit Hilfe einer Rakel vorgenommen, wobei die Schichtdicke der Materialschicht durch Einstellung des Abstands zwischen der Unterkante der Rakel und der materialzugewandten Oberfläche des Materialträgers eingestellt wird.

Das erfindungsgemäße Verfahren eignet sich besonders für die Verarbeitung von hochviskosem, photopolymerisierbaren Material, wie z.B. eines Harzes mit keramischem oder metallischem Füllstoff. Unter einem hochviskosen Material wird hierbei ein Material verstanden, dass bei einer Temperatur von 20°C eine Viskosität von mindestens 10 Pa·s aufweist.

Gemäß einem weiteren Aspekt der Erfindung ist eine Vorrichtung zur Durchführung des erfindungsgemäßen Verfahrens vorgesehen, umfassend
- einen Materialträger für photopolymerisierbares Material, der zumindest bereichsweise lichtdurchlässig ausgebildet ist,
- eine Bauplattform, die in einstellbarer Höhe über dem Materialträger gehalten ist,
- eine Bestrahlungseinheit, die zur ortsselektiven Bestrahlung einer zwischen der Unterseite der Bauplattform und dem Materialträger ausgebildeten Materialschicht ansteuerbar ist, wodurch eine Bauteilschicht erzeugbar ist,
- eine Materialentfernungseinheit zur zumindest
teilweisen Entfernung von nach dem Anheben des Bauteils an diesem, insbesondere an der Bauteilschicht, anhaftendem, nicht ausgehärteten photopolymerisierbaren Material.

Erfindungsgemäß ist die Materialentfernungseinheit verlagerbar angeordnet, um für den Materialentfernungsschritt zwischen das angehobene Bauteil und den Materialträger gebracht zu werden. Insbesondere ist die Materialentfernungseinheit in horizontaler Richtung, d.h. parallel zur Ebene der Bauteilschichten, verfahrbar, um zwischen das angehobene Bauteil und den Materialträger gebracht zu werden. Sobald die Materialentfernungseinheit zwischen dem angehobenen Bauteil und dem Materialträger zu liegen kommt, erfolgt im Falle einer Materialentfernungseinheit, die nach dem Prinzip der kontaktbehafteten Materialentfernung arbeitet, ein Inkontaktbringen der Materialentfernungseinheit und dem nicht ausgehärteten, an dem Bauteil anhaftenden Material. Zu diesem Zweck kann entweder das Bauteil senkrecht in Richtung zum zur Materialentfernungseinheit abwärts verfahren werden oder die Materialentfernungseinheit senkrecht in Richtung zum Bauteil aufwärts verfahren werden.

Bevorzugt umfasst die Vorrichtung weiters eine in einstellbarer Höhe und/oder mit einstellbarer Neigung über dem Materialträger gehaltene Rakel zum Ausbilden der Materialschicht auf dem Materialträger, wobei zur Höhenverstellung eine Stelleinheit vorgesehen ist.

Bevorzugt umfasst die Materialentfernungseinheit ein Kontaktelement, vorzugsweise ein saugfähiges, insbesondere flächiges Kontaktelement, welches zum Inkontaktbringen mit dem anhaftenden photopolymerisierbaren Material angeordnet ist.

Bevorzugt ist vorgesehen, dass das saugfähige flächige Kontaktelement als verfahrbares Band ausgebildet ist. Bei dem saugfähigen Kontaktelement kann es sich beispielsweise um ein Zellstoffband, insbesondere ein fusselarmes Zellstoffband handeln.

Gemäß einer weiteren bevorzugten Ausbildung weist die Materialentfernungseinheit einen Applikator zum Aufbringen eines Lösungsmittels oder von Partikeln auf das saugfähige Kontaktelement auf. Der Applikator kann für die Aufbringung eines Lösungsmittels einen Tropfenapplikator oder eine Sprüheinrichtung aufweisen.

Für die Ansteuerung umfasst die Vorrichtung gemäß einer bevorzugten Ausbildung
- einen elektronischen Speicher für ein virtuelles dreidimensionales Modell der Bauteilschichten und des daraus aufgebauten Bauteils,
- eine Steuereinheit, der das virtuelle Modell der Bauteilschichten zugeführt ist und die dazu ausgebildet ist, in aufeinanderfolgenden Bestrahlungsschritten übereinanderliegende Bauteilschichten auf der Bauplattform jeweils mit vorgegebener Geometrie durch Steuerung der Bestrahlungseinheit zu polymerisieren und die Materialentfernungseinheit für die Durchführung des Materialentfernungsschritts anzusteuern.

Die Erfindung wird nachfolgend anhand von in der Zeichnung schematisch dargestellten Ausführungsbeispielen näher erläutert. In dieser zeigen
Fig. 1 bis 3 eine Schnittansicht einer Vorrichtung zum schichtweisen Aufbau eines Bauteils in aufeinanderfolgenden Phasen des Verfahrensablaufs,
Fig. 4 bis 11 den Ablauf einer Materialentfernung gemäß der Erfindung,
Fig. 12 bis 16 den Ablauf einer abgewandelten Ausführung der Materialentfernung gemäß der Erfindung,
Fig. 17 bis 21 den Ablauf einer Partikelaufbringung gemäß der Erfindung,
Fig. 22 bis 31 den Ablauf einer abgewandelten Ausführung der Materialentfernung gemäß der Erfindung,
Fig. 32 eine Ausführung einer bandförmigen Materialentfernungseinheit, und
Fig. 33 eine alternative Ausführung einer Materialentfernungseinheit.

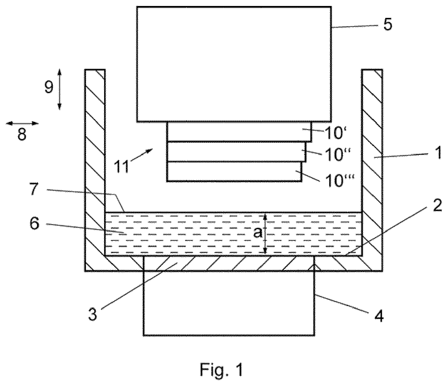

Ein Verfahren und eine Vorrichtung zum schichtweisen Aufbau eines Bauteils aus photopolymerisierbarem Material wird zunächst unter Bezugnahme auf die Fig. 1 bis 3 beschrieben, wobei es sich um eine grundsätzlich bereits aus der EP 2505341 A1 bekannte Vorrichtung handelt. Die in Luft oder einer anderen Gasatmosphäre befindliche Vorrichtung weist eine Wanne 1 auf, deren Wannenboden einen Materialträger 2 ausbildet, der zumindest in einem Teilbereich 3 durchsichtig oder durchscheinend ist. Dieser Teilbereich 3 des Materialträgers erfasst zumindest die Ausdehnung der durch die Belichtungseinheit 4 bestrahlbaren Fläche, wobei die Belichtungseinheit 4 unter dem Materialträger 2 angeordnet ist. Die Belichtungseinheit 4 weist eine nicht näher dargestellte Lichtquelle und einen Lichtmodulator auf, mit dem die Intensität von einer Steuereinheit gesteuert und ortsselektiv eingestellt werden kann, um ein Belichtungsfeld mit der für die momentan zu bildende Schicht gewünschten Geometrie an dem Materialträger 2 zu erzeugen. Alternativ kann in der Belichtungseinheit auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 4 gegenüber ist über dem Materialträger 2 eine Bauplattform 5 vorgesehen, die von einem nicht dargestellten Hubmechanismus getragen wird, so dass sie in höhenverstellbarer Weise über dem Materialträger 2 im Bereich über der Belichtungseinheit 4 gehalten wird. Die Bauplattform 5 kann ebenfalls durchsichtig oder durchscheinend sein.

Auf dem Materialträger 2 befindet sich ein Bad aus hochviskosem photopolymerisierbaren Material 6. Der Materialspiegel 7 des Bades wird durch ein geeignetes Element definiert, wie z.B. eine Rakel, welche das Material in einer bestimmten Materialschichtdicke a gleichmäßig auf den Materialträger 2 aufträgt. Der Wanne 1 kann beispielsweise eine Führungsschiene zugeordnet sein, auf der ein Schlitten in Richtung des Doppelpfeils 8 verschieblich geführt ist. Ein Antrieb sorgt für die Hin- und Herbewegung des Schlittens, der eine Halterung für eine Rakel aufweist. Die Halterung weist beispielsweise eine Führung und eine Verstelleinrichtung auf, um die Rakel in Richtung des Doppelpfeils 9 in Höhenrichtung zu verstellen. Damit kann der Abstand der Unterkante der Rakel vom Materialträger 2 eingestellt werden. Die Rakel kommt zum Einsatz, wenn sich die Bauplattform wie in Fig. 1 dargestellt im angehobenen Zustand befindet, und dient dazu das Material 6 gleichmäßig unter Einstellung einer vorgegebenen Schichtdicke zu verteilen. Die sich beim Materialverteilungsvorgang ergebende Schichtdicke des Materials 6 ist durch den Abstand der Unterkante der Rakel vom Materialträger 2 definiert.

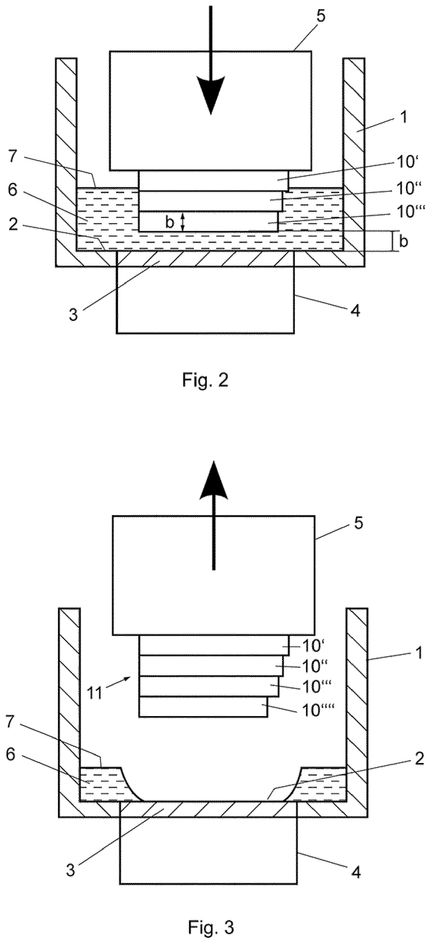

Die so entstandene Materialschichtdicke a ist dabei größer als die Bauteilschichtdicke b (Fig. 2). Zur Definition einer Schicht aus photopolymerisierbarem Material wird in folgender Weise vorgegangen. Die Bauplattform 5, an der bereits Bauteilschichten 10', 10" und 10‴ ausgebildet wurden, wird, wie in Fig. 2 dargestellt, durch den Hubmechanismus in gesteuerter Weise abgesenkt, sodass die Unterseite der untersten Bauteilschicht 10‴ die Oberfläche des Materials 6 mit Höhe a zunächst berührt, dann eintaucht und sich dem Materialträger 2 soweit nähert, dass zwischen der Unterseite der untersten Bauteilschicht 10‴ und dem Materialträger 2 genau die gewünschte Bauteilschichtdicke b verbleibt. Während dieses Eintauchvorgangs wird photopolymerisierbares Material aus dem Zwischenraum zwischen der Unterseite der untersten Bauteilschicht 10‴ und dem Materialträger 2 verdrängt. Sobald sich die Bauteilschichtdicke b eingestellt hat, erfolgt die für diese Bauteilschicht spezifische ortsselektive Belichtung, um die Bauteilschicht 10ʺʺ in der gewünschten Form auszuhärten. Nach der Bildung der Bauteilschicht 10ʺʺ wird die Bauplattform 5 mittels des Hubmechanismus wieder angehoben, was den in Fig. 3 gezeigten Zustand herbeiführt. Das photopolymerisierbare Material 6 ist im belichteten Bereich nicht mehr vorhanden.

Diese Schritte werden nachfolgend mehrfach wiederholt, um weitere Bauteilschichten aus photopolymerisierbarem Material zu erhalten. Das im belichteten Bereich nicht mehr vorhandene Material wird durch die Wiederherstellung des Materialspiegels 7 bzw. der Materialschichtdicke a ersetzt. Der Abstand der Unterseite der zuletzt gebildeten Bauteilschicht 10ʺʺ zum Materialträger 2 wird auf die gewünschte Bauteilschichtdicke b eingestellt und daraufhin das photopolymerisierbare Material in der gewünschten Weise ortsselektiv ausgehärtet.

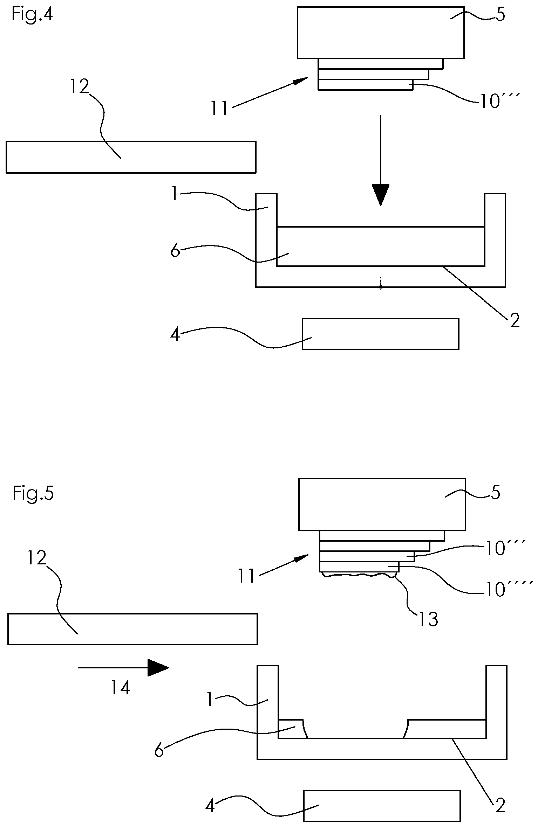

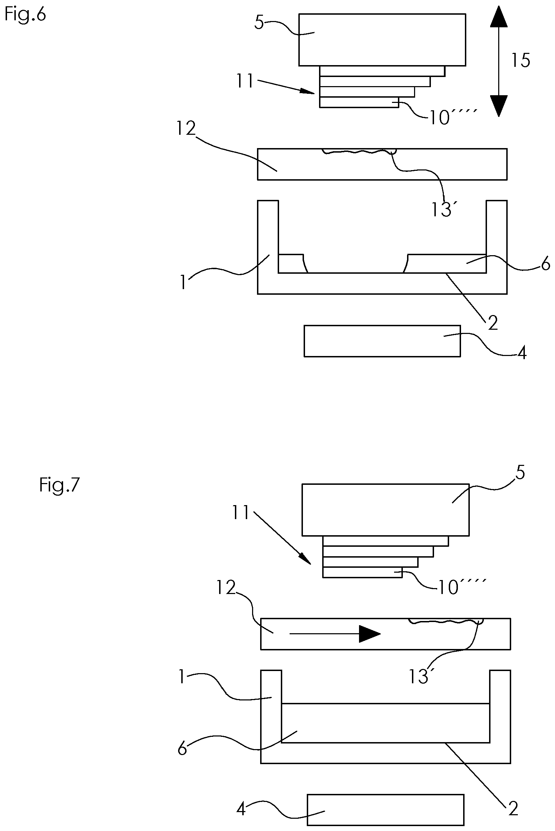

Beim Anheben der Bauplattform bleibt eine Menge 13 eines nicht ausgehärteten photopolymerisierbaren Materials 6 an dem Bauteil, insbesondere an der zuletzt aufgebauten Bauteilschicht 10ʺʺ, haften. Erfindungsgemäß umfasst die Vorrichtung daher eine Materialentfernungseinheit 12, wie in den Fig. 4 bis 11 dargestellt. Die Fig. 4 zeigt die Vorrichtung vor der Ausbildung der Bauteilschicht 10ʺʺ. Die Materialentfernungseinheit 12 ist in ihrer Ausgangsposition neben der Wanne 1 positioniert und ist im Sinne des Pfeils 14 (Fig. 5) in horizontaler Richtung verfahrbar. Anhaftendes Material 13 wird nun nach Ausbildung der Bauteilschicht 10ʺʺ dadurch zumindest teilweise entfernt, dass die Materialentfernungseinheit 12 zunächst bei angehobener Bauplattform 5 zwischen Bauteil 11 und Wanne 1 verbracht wird. Danach wird die zuletzt erzeugte Bauteilschicht 10ʺʺ und die Materialentfernungseinheit 12 durch eine Relativbewegung in Richtung des Pfeils 15 in Kontakt gebracht, sodass die an der Unterseite und ggf. an der Seitenfläche der untersten Bauteilschicht 10ʺʺ anhaftende, nicht ausgehärtete Materialmenge 13 zumindest teilweise auf die Materialentfernungseinheit 12 übertragen wird, sodass die Materialmenge 13' auf die Materialentfernungseinheit 12 gelangt, wie in Fig. 6 dargestellt ist. Die Übertragung der Materialmenge 13' auf die Materialentfernungseinheit 12 erfolgt beispielsweise durch die Kapillarwirkung eines saugfähigen Materials der Materialentfernungseinheit 12. Dann erfolgt eine Relativbewegung, um das Bauteil von der Materialentfernungseinheit zu trennen.

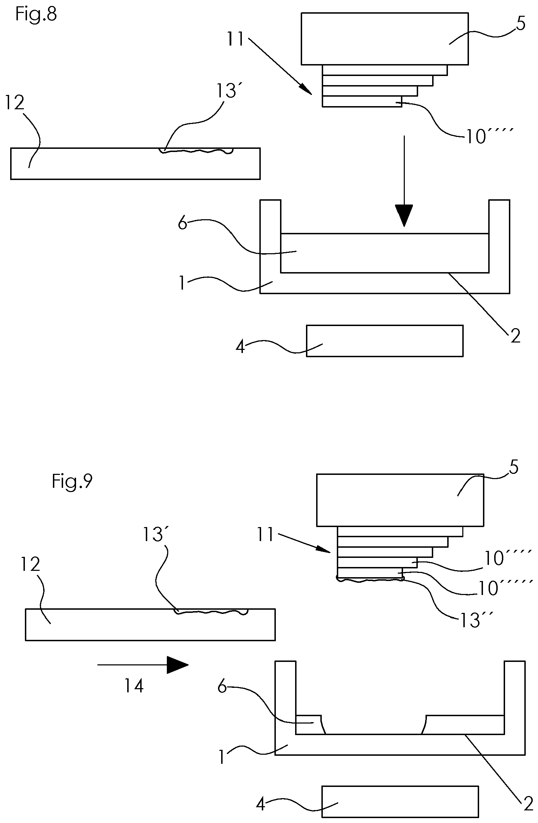

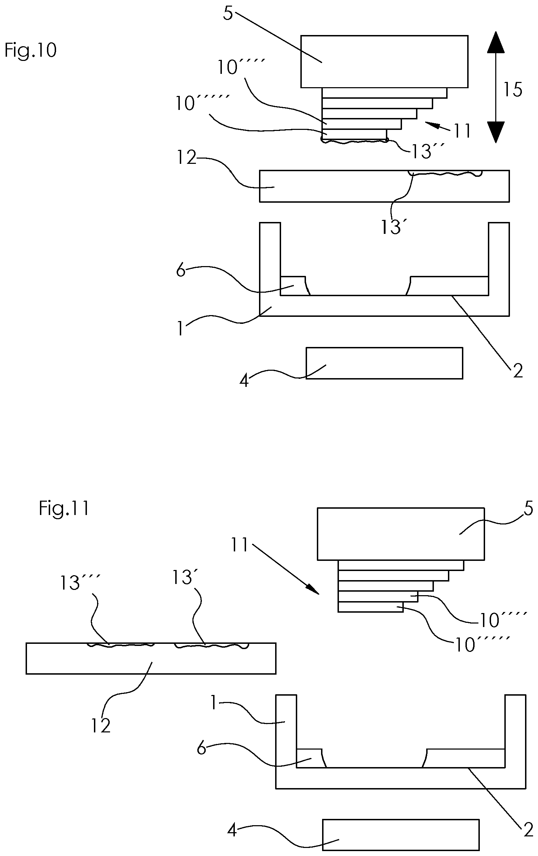

Nach diesem Materialentfernungsschritt wird ein Oberflächenabschnitt der Materialentfernungseinheit 12 ein Stück weiterverfahren, um die entfernte Materialmenge von der Bauteilschicht 10ʺʺ wegzubefördern und einen neuen Oberflächenabschnitt der Materialentfernungseinheit 12 für einen weiteren Materialentfernungsschritt bereitzustellen, wie in Fig. 7 dargestellt. Danach wird die Materialentfernungseinheit 12 wieder in ihre Ausgangsposition zurückgebracht (Fig. 8), sodass eine weitere Bauteilschicht 10ʺʺ′ ausgebildet werden kann, an der wiederum eine Materialmenge 13" anhaftet (Fig. 9). Die Materialentfernungseinheit 12 wird für den nächsten Materialentfernungsschritt zwischen Bauteil 11 und Wanne 1 verfahren und die Materialmenge 13‴ wird wie zuvor beschrieben auf die Materialentfernungseinheit 12 übertragen (Fig. 10). Schließlich wird die Materialentfernungseinheit 12 in ihre Ausgangsposition gebracht (Fig. 11) und die nächste Bauteilschicht kann erzeugt werden.

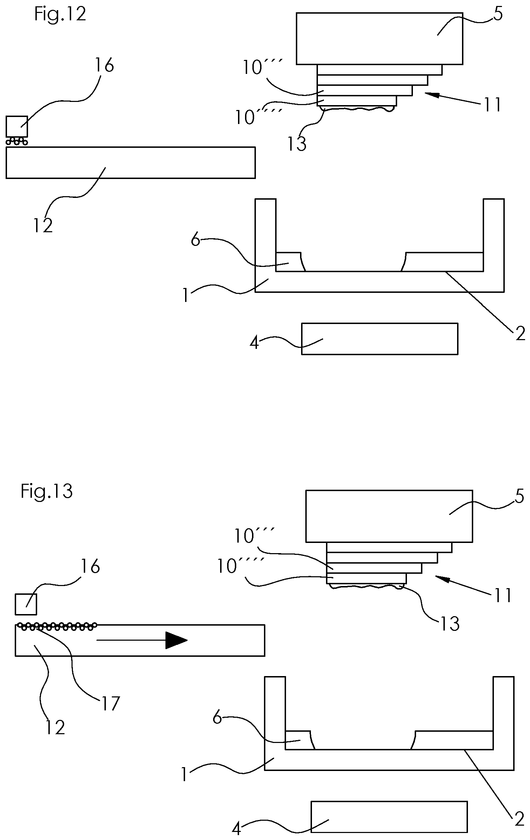

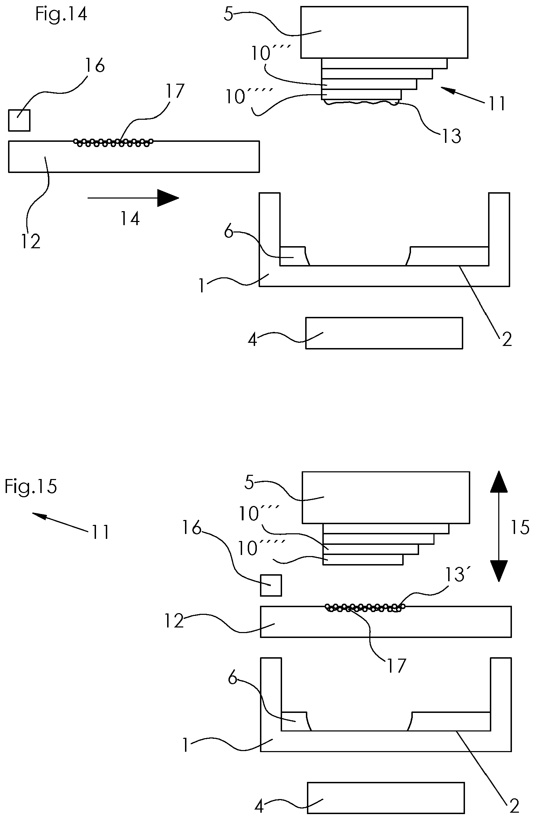

Bei der abgewandelten Vorgehensweise gemäß den Fig. 12 bis 16 weist die Materialentfernungseinheit 12 einen Applikator 16 für eine Flüssigkeit, wie z.B. ein Lösungsmittel, auf. Bevor die Materialentfernungseinheit 12 zwischen Bauteil 11 und Wanne 1 verfahren wird, wird die Flüssigkeit auf die Oberfläche der Materialentfernungseinheit 12 aufgebracht, sodass eine durchtränkte Schicht 17 entsteht (Fig. 13). Die anhaftende Materialmenge 13 wird in der Folge mit Hilfe der Schicht 17 von der Bauteilschicht zumindest teilweise übertragen (Fig. 15), sodass die Materialmenge 13' auf die Materialentfernungseinheit 12 gelangt.

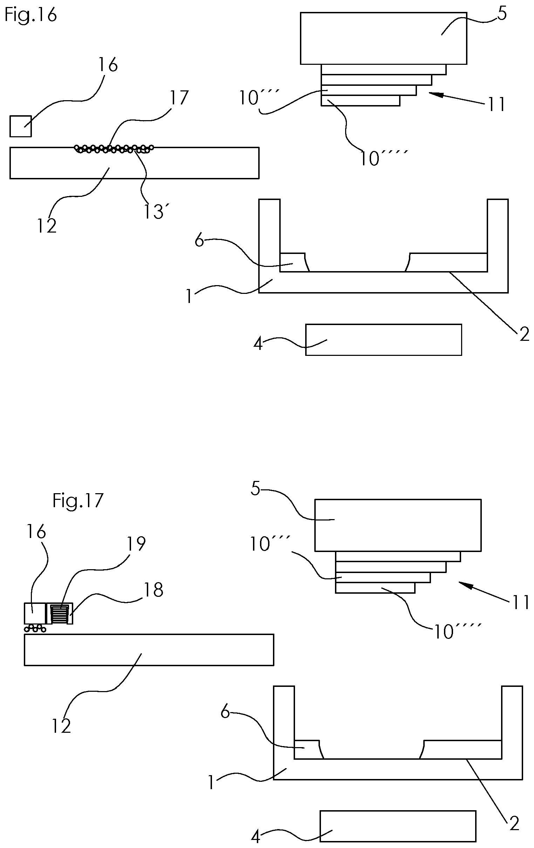

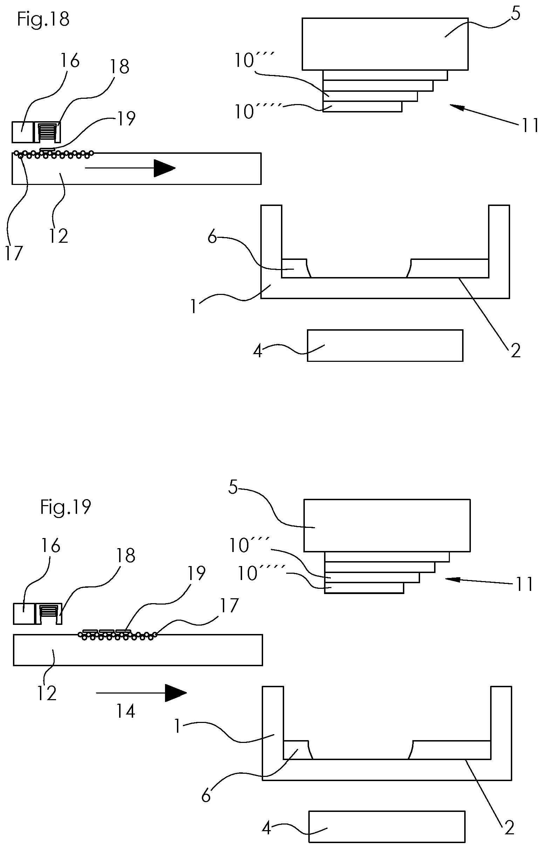

Bei der Ausbildung gemäß Fig. 17 bis 21 wird die Materialentfernungseinheit 12 oder eine gesonderte Einheit verwendet, um Partikel 19 auf die gereinigte Bauteilschicht 10ʺʺ aufzubringen, bevor die nächste Bauteilschicht erzeugt wird. Wie in Fig. 17 dargestellt, ist zu diesem Zweck ein Applikator 18 vorgesehen, der Partikel 19 auf die Materialentfernungseinheit 12 aufbringt (Fig. 18).

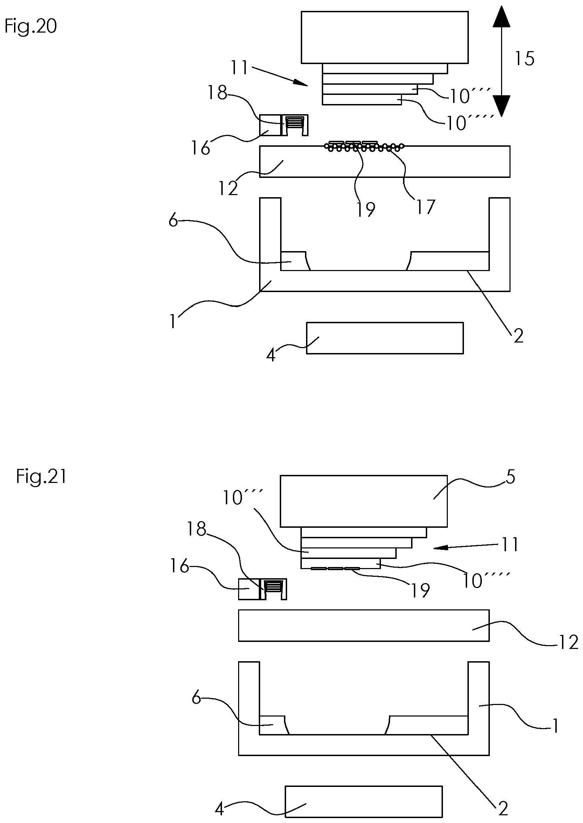

Bevorzugt bringt auch der Applikator 16 eine Flüssigkeit auf, sodass eine durchtränkte Schicht 17 entsteht. Nachdem die Materialentfernungseinheit 12 zwischen das Bauteil 11 und die Wanne 1 verbracht wurde (Fig. 20), erfolgt durch senkrechtes Inkontaktbringen der Materialentfernungseinheit 12 und der Bauteilschicht 10ʺʺ ein Übergang der Partikel 19 auf die Bauteilschicht 10ʺʺ, wie in Fig. 21 dargestellt.

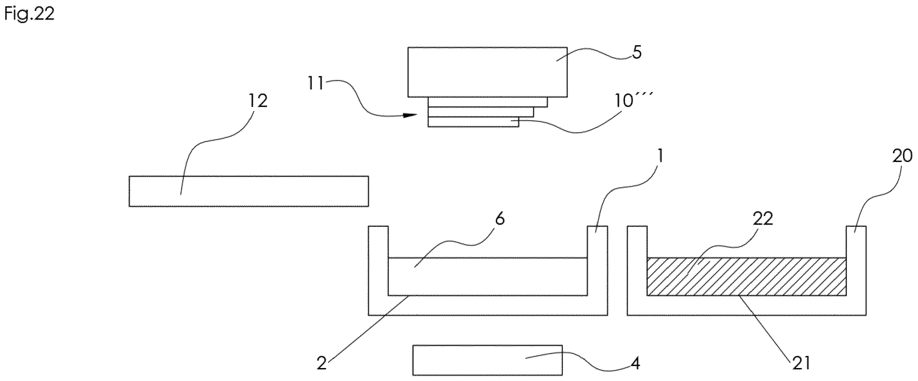

Fig. 22 bis 31 zeigen ein Beispiel eines Verfahrens, mit dem eine Bauteilschicht aus zwei verschiedenen photopolymerisierbaren Materialien hergestellt werden kann. Hierfür wird eine abgewandelte Vorrichtung verwendet, die im Vergleich zu den vorangehenden Beispielen eine zweite Materialwanne 20 mit einem Materialträger 21 aufweist, in welcher ein zweites Material 22 aufgenommen ist.

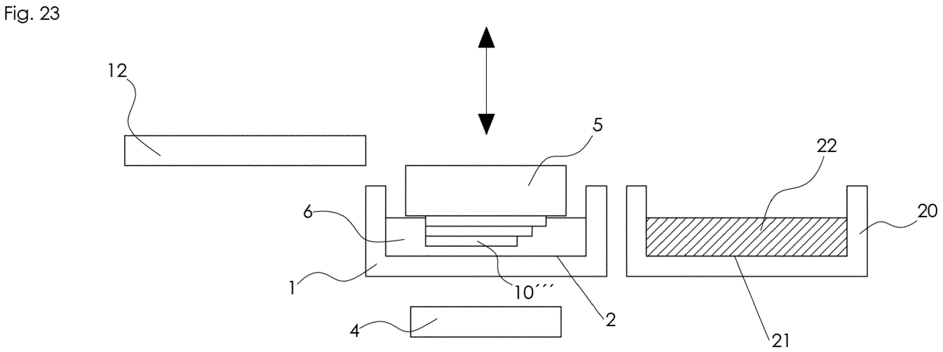

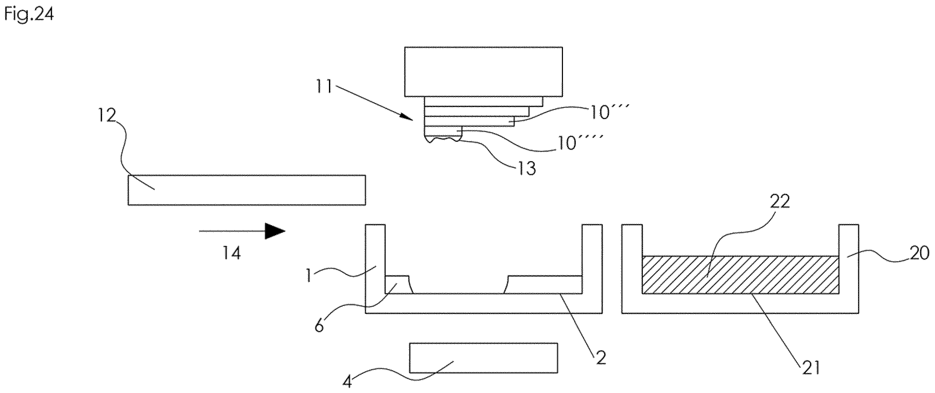

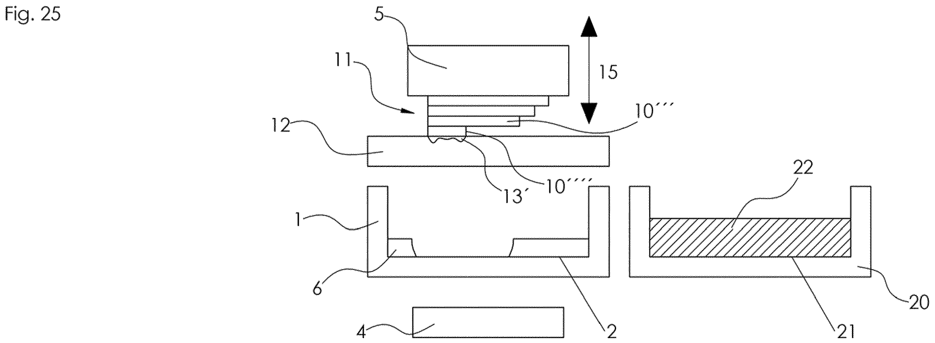

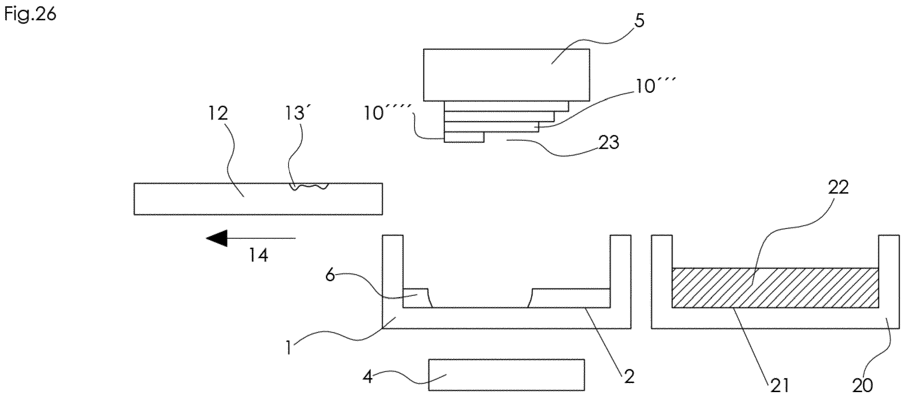

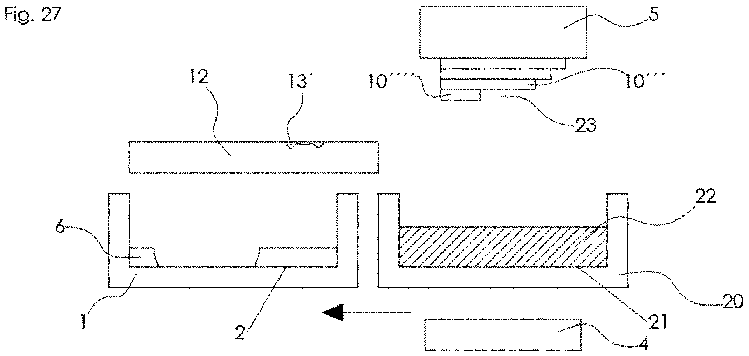

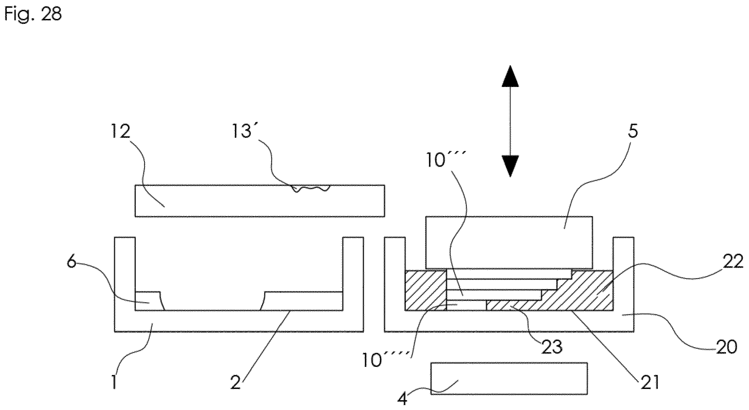

Zuerst wird eine erste Bauteilschicht 10‴ durch Eintauchen des Bauteils in das in der Wanne 1 befindliche Material 6 und Aushärten des Materials 6 erzeugt (Fig. 23). Nach dem Anheben des Bauteils 11 (Fig. 24) haftet wieder eine Materialmenge 13 an der zuletzt aufgebauten Bauteilschicht 10ʺʺ an, und wie bereits beschrieben wird die Materialmenge 13' auf die Materialentfernungseinheit 12 übertragen (Fig. 25 und 26). In Fig. 26 ist ersichtlich, dass die Bauteilschicht 10ʺʺ einen Teilbereich 23 der Bauteilschicht 10‴ unbedeckt lässt. In diesem Teilbereich 23 wird nun eine Schicht aus dem zweiten Material 22 erzeugt, indem zuerst die erste Wanne 1 horizontal weggebracht und stattdessen die zweite Wanne 20 zwischen dem Bauteil 11 und der Belichtungseinheit 4 angeordnet wird (Fig. 27). Nun wird das Bauteil 11 in das zweite Material 22 eingetaucht, bis die zuvor erzeugte Bauteilschicht 10 den Materialträger 2 berührt, sodass sich im Teilbereich 23 eine Materialschicht ausbildet, die ausgehärtet wird (Fig. 28). Da die anhaftende Materialmenge 13 des ersten Materials 6 zuvor zumindest teilweise auf die Materialentfernungseinheit 12 übertragen wird, sodass die Materialmenge 13' auf die Materialentfernungseinheit 12 gelangte, wird vermieden, dass sich Material 6 beim Eintauchen in die Wanne 20 mit dem Material 22 vermischt. Weiters wird vermieden, dass die zuvor anhaftende Materialmenge 13 durch die zuletzt genannte Ausbildung ebenfalls ausgehärtet wird und die auszubildende Geometrie verfälscht.

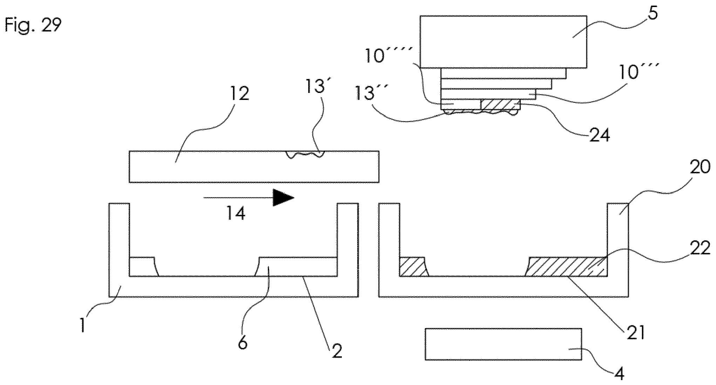

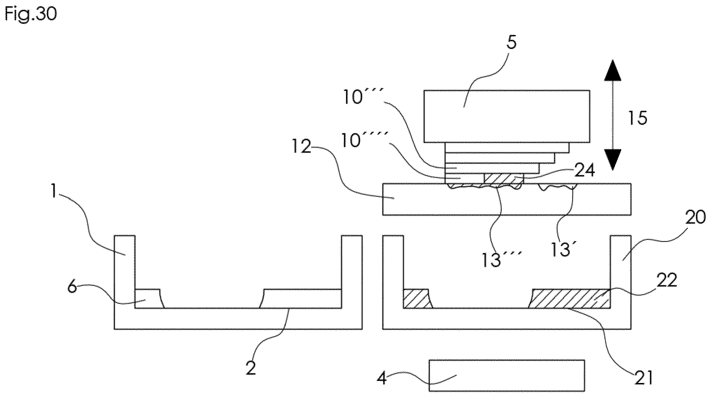

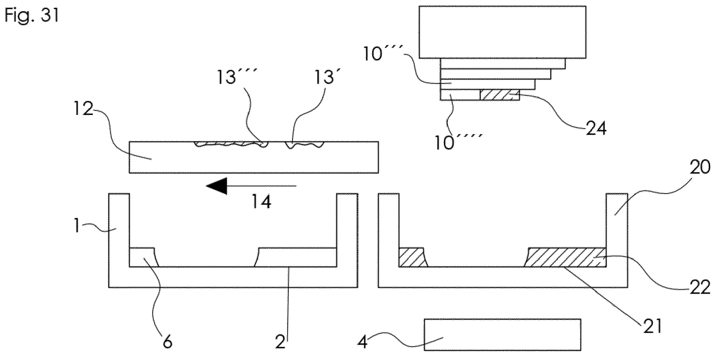

In Fig. 29 ist die aus dem zweiten Material 22 erzeugte Teilschicht 24 ersichtlich. Die an der letzten Bauteilschicht anhaftende Materialmenge 13" wird wieder zumindest teilweise auf die Materialentfernungseinheit 12 übertragen wird, sodass die Materialmenge 13‴ auf die Materialentfernungseinheit 12 gelangt (Fig. 30 und 31).

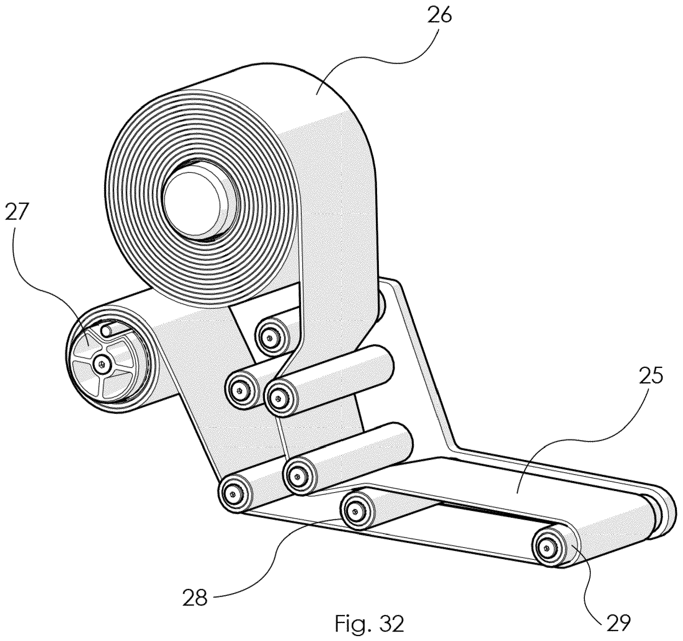

Fig. 32 zeigt eine bevorzugte Ausführungsform der Materialentfernungseinheit 12. Die Materialentfernungseinheit 12 umfasst ein verfahrbares Band 25, das von einer Vorratsrolle 26 abgerollt und auf die Empfängerrolle 27 aufgerollt wird. Dazwischen wird das verfahrbare Band 25 um mehrere Umlenk- und Anpressrollen geführt, wobei ein zwischen den Rollen 28 und 29 befindlicher Abschnitt des Bandes 25 den Kontaktabschnitt bildet, der mit der Bauteilschicht in Kontakt gebracht wird, um die anhaftende Materialmenge 13 zumindest teilweise auf die Materialentfernungseinheit 12 zu übertragen, sodass die Materialmenge 13' auf die Materialentfernungseinheit 12 gelangt. Das verfahrbare Band 25 kann aus einem saugfähigen Material, insbesondere auf Zellstoffbasis, bestehen.

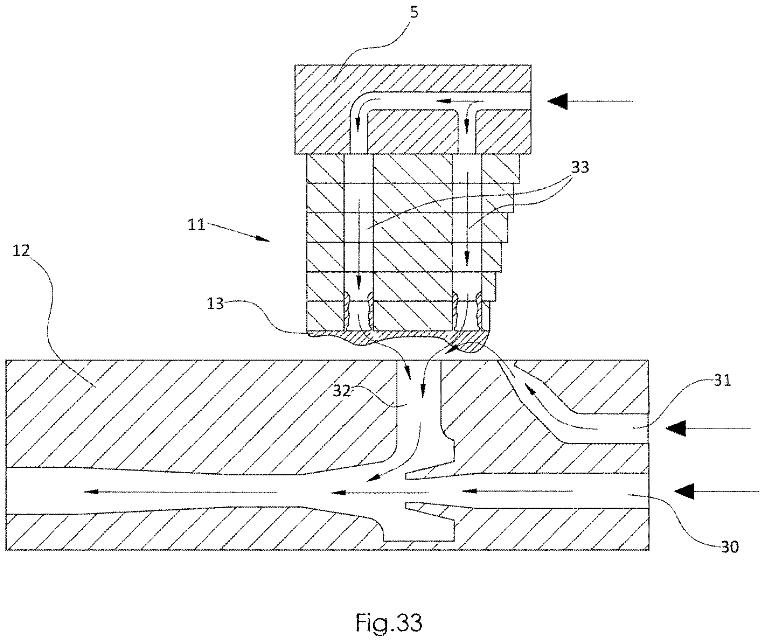

Fig. 33 zeigt eine alternative Ausbildung der Materialentfernungseinheit 12, mit welcher die anhaftende Materialmenge 13 pneumatisch zumindest teilweise entfernt bzw. abgesaugt wird. Die Materialentfernungseinheit 12 umfasst zu diesem Zweck einen ersten Kanals 30 für ein Gas, das unter Ausnutzung des Venturi-Effekts einen Unterdruck an der Einmündung des Kanals 32 erzeugt. Ein weiterer Kanal 31 mündet an der Oberfläche der Materialentfernungseinheit 12 und erzeugt einen gegen die anhaftende Materialmenge 13 gerichteten Gasstrahl. Um zu verhindern, dass die anhaftende Materialmenge 13 in das Bauteil 11 gedrückt wird, wird weiters ein Überdruck an der Bauteilunterseite erzeugt, indem über in dem Bauteil 11 ausgebildete Bohrungen 33 (oder anderweitige Hohlräume) sowie die Bauplattform 5 ein Gasdruck erzeugt wird, der die anhaftende Materialmenge 13 in Richtung zum Kanal 32 leitet.

## Patentansprüche

1. Verfahren zum schichtweisen Aufbau eines Bauteils (11) aus photopolymerisierbarem Material, insbesondere einem Harz mit keramischem oder metallischem Füllstoff, bei dem nacheinander Bauteilschichten (10', 10", 10ʺ′) übereinander ausgebildet werden, indem jeweils auf einem Materialträger (2) eine Materialschicht (6) des photopolymerisierbaren Materials ausgebildet wird und die Bauplattform (5) oder das an der Bauplattform (5) zumindest teilweise aufgebaute Bauteil (11) in die Materialschicht (6) abgesenkt wird, sodass sich zwischen der Bauplattform (5) bzw. dem Bauteil (11) und dem Materialträger (2) eine Schicht des photopolymerisierbaren Materials ausbildet, die insbesondere durch Bestrahlung durch den Materialträger (2) hindurch ortsselektiv zur Ausbildung der gewünschten Geometrie der Bauteilschicht (10', 10'', 10ʺ′) ausgehärtet wird, wonach das Bauteil (11) mit der Bauteilschicht (10', 10'', 10‴) angehoben wird, wobei nach der Ausbildung einer Bauteilschicht (10', 10'', 10ʺ′) ein Materialentfernungsschritt erfolgt, in dem nach dem Anheben des Bauteils (11) an dem Bauteil (11) , insbesondere an der Bauteilschicht (10', 10", 10ʺ′), anhaftendes, nicht oder nicht vollständig ausgehärtetes photopolymerisierbares Material mittels einer Materialentfernungseinheit (12) zumindest teilweise entfernt wird, **dadurch gekennzeichnet, dass** die Materialentfernungseinheit (12) für den Materialentfernungsschritt zwischen das angehobene Bauteil (11) und den Materialträger (2) gebracht wird.

2. Verfahren nach Anspruch 1, **dadurch gekennzeichnet, dass** der Materialentfernungsschritt das Inkontaktbringen des anhaftenden photopolymerisierbaren Materials mit einem Kontaktelement, vorzugsweise einem saugfähigen, insbesondere flächigen Kontaktelement, umfasst.

3. Verfahren nach Anspruch 2, **dadurch gekennzeichnet, dass** das Kontaktelement als verfahrbares Band ausgebildet ist, wobei das Band nach einem Materialentfernungsschritt verfahren wird, um einen Bandabschnitt mit photopolymerisierbarem Material abzufördern und einen neuen Bandabschnitt für einen weiteren Materialentfernungsschritt bereitzustellen.

4. Verfahren nach einem der Ansprüche 1, 2 oder 3, **dadurch gekennzeichnet, dass** der Materialentfernungsschritt in wenigstens zwei Schritten durchgeführt wird, wobei in einem ersten Schritt eine Teilmenge des anhaftenden photopolymerisierbaren Materials entfernt wird und in einem zweiten Schritt und ggf. zumindest einem weiteren Schritt eine Restmenge des anhaftenden photopolymerisierbaren Materials entfernt wird.

5. Verfahren nach einem der Ansprüche 2, 3 oder 4, **dadurch gekennzeichnet, dass** das saugfähige Kontaktelement
mit einer Flüssigkeit getränkt ist oder vor dem Inkontaktbringen mit einer Flüssigkeit, vorzugsweise einem Lösungsmittel, versehen wird.

6. Verfahren nach einem der Ansprüche 2 bis 5, **dadurch gekennzeichnet, dass** nach dem Materialentfernungsschritt Partikel auf die Bauteilschicht aufgebracht werden, wobei die Partikel vorzugsweise mit dem Kontaktelement zur Bauteilschicht transportiert und durch Inkontaktbringen des Kontaktelements mit der Bauteilschicht auf die Bauteilschicht aufgebracht werden.

7. Verfahren nach einem der Ansprüche 1 bis 6, **dadurch gekennzeichnet, dass** die Bauteilschicht nach dem Materialentfernungsschritt einer optischen Überprüfung mittels einer Bildaufnahmeeinrichtung oder einem 3D-Scanner unterzogen wird.

8. Verfahren nach einem der Ansprüche 1 bis 7, **dadurch gekennzeichnet, dass** eine erste Bauteilschicht aus einem ersten photopolymerisierbaren Material gebildet wird und dass nach dem Materialentfernungsschritt zur Entfernung von an der ersten Bauteilschicht anhaftendem ersten photopolymerisierbaren Material eine zweite Bauteilschicht aus einem zweiten photopolymerisierbaren Material gebildet wird, das sich vom ersten photopolymerisierbaren Material unterscheidet.

9. Verfahren nach einem der Ansprüche 1 bis 8, **dadurch gekennzeichnet, dass** eine Bauteilschicht mit einer ersten Geometrie aus einem ersten photopolymerisierbaren Material gebildet wird, wobei die erste Geometrie wenigstens einen
Teilbereich der zuletzt ausgebildeten Bauteilschicht unbedeckt lässt, dass mittels des Materialentfernungsschritts an der Bauteilschicht und in dem wenigstens einen unbedeckten Teilbereich anhaftendes erstes photopolymerisierbares Material entfernt wird und dass danach ein Bauschritt mit einem zweiten photopolymerisierbaren Material vorgenommen wird, das sich vom ersten photopolymerisierbaren Material unterscheidet, wobei der Bauschritt das Aushärten von Material im Teilbereich umfasst.

10. Verfahren nach einem der Ansprüche 1 bis 9, **dadurch gekennzeichnet, dass** der Materialentfernungsschritt das Erzeugen einer Fluidströmung, wie z.B. einer Flüssigkeits- oder Gasströmung, im Bereich des anhaftenden, nicht ausgehärteten photopolymerisierbaren Materials umfasst, welche das Material mitreißt.

11. Vorrichtung zur Durchführung des Verfahrens nach einem der Ansprüche 1 bis 10, umfassend
- einen Materialträger (2) für photopolymerisierbares Material, der zumindest bereichsweise lichtdurchlässig ausgebildet ist,
- eine Bauplattform (5), die in einstellbarer Höhe über dem Materialträger (2) gehalten ist,
- eine Bestrahlungseinheit (4), die zur ortsselektiven Bestrahlung einer zwischen der Unterseite der Bauplattform (5) und dem Materialträger (2) ausgebildeten Materialschicht (6) ansteuerbar ist, wodurch eine Bauteilschicht (10', 10" ', 10ʺ′) erzeugbar ist,
- eine Materialentfernungseinheit (12) zur zumindest teilweisen Entfernung von nach dem Anheben des Bauteils (11) an diesem, insbesondere an der Bauteilschicht (10', 10", 10ʺ′), anhaftendem, nicht ausgehärteten photopolymerisierbaren Material, **dadurch gekennzeichnet, dass** die Materialentfernungseinheit (12) verlagerbar angeordnet ist, um für den Materialentfernungsschritt zwischen das angehobene Bauteil (11) und den Materialträger (2) gebracht zu werden.

12. Vorrichtung nach Anspruch 11, **dadurch gekennzeichnet, dass** die Materialentfernungseinheit ein Kontaktelement, vorzugsweise ein saugfähiges, insbesondere flächiges Kontaktelement, umfasst, welches zum Inkontaktbringen mit dem anhaftenden photopolymerisierbaren Material angeordnet ist.

13. Vorrichtung nach Anspruch 11 oder 12, **dadurch gekennzeichnet, dass** das Kontaktelement als verfahrbares Band ausgebildet ist.

14. Vorrichtung nach Anspruch 12 oder 13, **dadurch gekennzeichnet, dass** die
Materialentfernungseinheit einen Applikator zum Aufbringen einer Flüssigkeit, vorzugsweise eines Lösungsmittels, oder von Partikeln auf das Kontaktelement aufweist.

## Claims

1. A method of building up a component (11) layer by layer from a photopolymerizable material, in particular from a resin with a ceramic or metallic filler, comprising successively forming component layers (10', 10'', 10‴) one on top of the other by forming a material layer (6) of the photopolymerizable material on a material carrier (2) and lowering the building platform (5) or the component (11) at least partially built up on the building platform (5) into the material layer (6), so that a layer of the photopolymerizable material is formed between the building platform (5) or the component (11) and the material carrier (2), which layer is cured in a location-selective manner, in particular by irradiation through the material carrier (2), to form the desired geometry of the component layer (10', 10", 10ʺ′), whereafter the component (11) is lifted with the component layer (10', 10", 10'''), wherein after the formation of the component layer (10', 10", 10ʺ′) a material removal step is carried out, in which, after lifting the component (11) photopolymerizable material that is not or not fully cured adhering to the component (11), in particular to the component layer (10', 10'', 10‴), is at least partially removed by means of a material removal unit (12), **characterized in that** the material removal unit (12) for the material removal step is brought between the lifted component (11) and the material carrier (2).

2. The method according to claim 1, **characterized in that** the material removal step comprises bringing the adhering photopolymerizable material into contact with a, preferably absorbent, in particular flat, contacting element.

3. The method according to claim 2, **characterized in that** the contacting element is designed as a movable belt, the belt being moved after a material removal step in order to convey away a belt section with photopolymerizable material on it and provide a new belt section for a further material removal step.

4. The method according to any one of claim 1, 2 or 3, **characterized in that** the material removal step is carried out in at least two steps, with a partial amount of the adhering photopolymerizable material being removed in a first step and a remaining amount of the adhering photopolymerizable material being removed in a second step and, if necessary, in at least one further step.

5. The method according to any one of claims 2, 3 or 4, **characterized in that** the absorbent contacting element is soaked with a liquid or is impregnated with a liquid, preferably a solvent, before it is brought into contact.

6. The method according to any one of claims 2 to 5, **characterized in that** after the material removal step, particles are applied to the component layer, the particles preferably being transported with the contacting element to the component layer and being applied to the component layer by bringing the contacting element into contact with the component layer.

7. The method according to any one of claims 1 to 6, **characterized in that**, after the material removal step, the component layer is subjected to an optical inspection by means of an image recording device or a 3D scanner.

8. The method according to any one of claims 1 to 7, **characterized in that** a first component layer is formed from a first photopolymerizable material and, after the material removal step to remove the first photopolymerizable material adhering to the first component layer, a second component layer is formed from a second photopolymerizable material, which is different from the first photopolymerizable material.

9. The method according to any one of claims 1 to 8, **characterized in that** a component layer with a first geometry is formed from a first photopolymerizable material, wherein the first geometry leaves uncovered at least a sub-area of the component layer formed last, that first photopolymerizable material adhering to the component layer and to the at least one uncovered sub-area is removed by means of the material removal step and that a building step is then carried out with a second photopolymerizable material that differs from the first photopolymerizable material, the building step comprising curing material in the sub-area.

10. The method according to any one of claims 1 to 9, **characterized in that** the material removal step comprises creating a fluid flow, such as a liquid or gas flow, in the area of the adhering, uncured photopolymerizable material which carries the material along with it.

11. A device for carrying out the method according to any one of claims 1 to 10, comprising
- a material carrier (2) for photopolymerizable material, which is at least partially translucent,
- a building platform (5) which is held at an adjustable height above the material carrier (2),
- an irradiation unit (4) which can be controlled for the location-selective irradiation of a material layer (6) formed between the underside of the building platform (5) and the material carrier (2), whereby a component layer (10', 10", 10''') can be generated,
- a material removal unit (12) for at least partial removal of uncured photopolymerizable material adhering to the component (11), in particular to the component layer (10', 10'', 10‴), after it has been lifted, **characterized in that** the material removal unit (12) is displaceably arranged to be brought between the lifted component and the material carrier for the material removal step.

12. The device according to claim 11, **characterized in that** the material removal unit comprises a contacting element, preferably an absorbent, in particular flat, contacting element which is arranged to be brought into contact with the adhering photopolymerizable material.

13. The device according to claim 11 or 12, **characterized in that** the contacting element is designed as a movable belt.

14. The device according to claim 12 or 13, **characterized in that** the material removal unit comprises an applicator for applying a liquid, in particular a solvent, or particles to the contacting element.

## Revendications

1. Procédé pour la construction en couches d'un composant (11) en un matériau photopolymérisable, en particulier une résine avec une charge céramique ou métallique, dans lequel des couches de composant (10', 10", 10ʺ′) sont formées l'une après l'autre, l'une sur l'autre, une couche de matériau (6) du matériau photopolymérisable étant formée à chaque fois sur un support de matériau (2), et la plate-forme de construction (5) ou le composant (11) construit au moins partiellement au niveau de la plate-forme de construction (5) étant abaissé(e) dans la couche de matériau (6), de sorte qu'une couche du matériau photopolymérisable se forme entre la plate-forme de construction (5) resp. le composant (11) et le support de matériau (2), qui est durcie de manière sélective en fonction de la position, en particulier par irradiation à travers le support de matériau (2), afin d'obtenir la géométrie souhaitée de la couche de composant (10', 10", 10ʺ′), après quoi le composant (11) est soulevé avec la couche de composant (10', 10", 10ʺ′), une étape d'enlèvement de matière ayant lieu après la formation d'une couche de composant (10', 10", 10ʺ′), dans lequel, le composant (11) ayant été soulevé, du matériau photopolymérisable non-durci ou pas complètement durci qui adhère au composant (11), en particulier à la couche de composant (10', 10", 10ʺ′), est enlevé au moins partiellement au moyen d'une unité d'enlèvement de matière (12),
**caractérisé en ce que**
pour l'étape d'enlèvement de matière, l'unité d'enlèvement de matière (12) est amenée entre le composant soulevé (11) et le support de matériau (2).

2. Procédé selon la revendication 1, **caractérisé en ce que** l'étape d'enlèvement de matière comprend la mise en contact du matériau photopolymérisable adhérent avec un élément de contact, de préférence un élément de contact absorbant, notamment plat.

3. Procédé selon la revendication 2, **caractérisé en ce que** l'élément de contact est conçu comme une bande mobile, la bande étant déplacée après une étape d'enlèvement de matière afin d'évacuer une section de bande contenant du matériau photopolymérisable et afin de fournir une nouvelle section de bande pour une autre étape d'enlèvement de matière.

4. Procédé selon l'une des revendications 1, 2 ou 3, **caractérisé en ce que** l'étape d'enlèvement de matière est réalisée en au moins deux étapes, dans lequel, dans une première étape, on enlève une partie du matériau photopolymérisable adhérent, et dans une seconde étape, et éventuellement au moins une étape supplémentaire, on enlève une quantité résiduelle de matériau photopolymérisable adhérent.

5. Procédé selon l'une des revendications 2, 3 ou 4, **caractérisé en ce que** l'élément de contact absorbant est imprégné d'un liquide ou est muni d'un liquide, de préférence un solvant, avant sa mise en contact.

6. Procédé selon l'une des revendications 2 à 5, **caractérisé en ce que** des particules sont appliquées sur la couche de composant après l'étape d'enlèvement de matière, les particules étant de préférence transportées avec l'élément de contact vers la couche de composant et étant appliquées sur la couche de composant en mettant l'élément de contact en contact avec la couche de composant.

7. Procédé selon l'une des revendications 1 à 6, **caractérisé en ce que,** après l'étape d'enlèvement de matière, la couche de composant est soumise à un contrôle optique à l'aide d'un appareil d'enregistrement d'images ou d'un scanner 3D.

8. Procédé selon l'une des revendications 1 à 7, **caractérisé en ce qu'**une première couche de composant est formée à partir d'un premier matériau photopolymérisable et **en ce que,** après l'étape d'enlèvement de matière pour enlever du premier matériau photopolymérisable adhérent à la première couche de composant, une deuxième couche de composant est formée à partir d'un deuxième matériau photopolymérisable, qui est différent du premier matériau photopolymérisable.

9. Procédé selon l'une des revendications 1 à 8, **caractérisé en ce que** une couche de composant avec une première géométrie est formée à partir d'un premier matériau photopolymérisable, la première géométrie laissant non-couverte au moins une zone partielle de la couche de composant formée en dernier lieu, **en ce que,** dans l'étape d'enlèvement de matière, on enlève du premier matériau photopolymérisable adhérent à la couche de composant et dans l'au moins une zone partielle non-couverte, et **en ce que** une étape de construction est ensuite réalisée avec un deuxième matériau photopolymérisable, qui est différent du premier matériau photopolymérisable, l'étape de construction comprenant le durcissement du matériau dans la zone partielle.

10. Procédé selon l'une des revendications 1 à 9, **caractérisé en ce que** l'étape d'enlèvement de matière comprend la génération d'un flux de fluide, tel que par ex. un flux de liquide ou de gaz, au niveau du matériau photopolymérisable adhérent et non durci, qui entraîne le matériau.

11. Dispositif pour la mise en oeuvre du procédé selon l'une des revendications 1 à 10, comprenant
- un support de matériau (2) pour un matériau photopolymérisable, qui est au moins partiellement translucide,
- une plate-forme de construction (5), qui est maintenue à une hauteur réglable au-dessus du support de matériau (2),
- une unité d'irradiation (4), qui peut être commandée pour l'irradiation de manière sélective en fonction de la position d'une couche de matériau (6) formée entre la face inférieure de la plate-forme de construction (5) et le support de matériau (2), moyennant quoi une couche de composant (10', 10", 10ʺ′) peut être produite,
- une unité d'enlèvement de matière (12) pour l'enlèvement au moins partiel de matériau photopolymérisable non durci adhérant au composant (11) après le soulèvement de celui-ci, en particulier à la couche de composant (10', 10", 10ʺ′), **caractérisé en ce que** l'unité d'enlèvement de matière (12) est disposée de manière mobile, pour être amenée entre le composant soulevé (11) et le support de matériau (2) pour l'étape d'enlèvement de matière.

12. Dispositif selon la revendication 11, **caractérisé en ce que** l'unité d'enlèvement de matière comprend un élément de contact, de préférence un élément de contact absorbant, notamment plat, qui est conçu pour sa mise en contact avec le matériau photopolymérisable adhérent.

13. Dispositif selon la revendication 11 ou 12, **caractérisé en ce que** l'élément de contact est conçu comme une bande mobile.

14. Dispositif selon la revendication 12 ou 13, **caractérisé en ce que** l'unité d'enlèvement de matière comporte un applicateur pour appliquer un liquide, de préférence un solvant, ou des particules sur l'élément de contact.
